# EUROPÄISCHE PATENTSCHRIFT

(11) **EP 3 395 290 B1**
(45) Veröffentlichungstag und Bekanntmachung des Hinweises auf die Patenterteilung: **04.09.2024**
(21) Anmeldenummer: 17168175.2
(22) Anmeldetag: 26.04.2017
(51) Int. Cl.: A61C 13/15

(54) **DENTALES LICHTHÄRTGERÄT**
DENTAL LIGHT CURING APPARATUS
APPAREIL DE PHOTOPOLYMÉRISATION DENTAIRE

(43) Veröffentlichungstag der Anmeldung: 31.10.2018
(73) Patentinhaber: Ivoclar Vivadent AG, 9494 Schaan (LI)
(72) Erfinder: Senn, Bruno, 9056 Gais (CH); Tommasini, Dario, 7205 Zizers (CH)
(74) Vertreter: Baldus, Oliver

(56) Entgegenhaltungen:
- DE-A1- 102008 027 220
- JP-A- 2011 200 451
- US-A1- 2002 133 970
- US-A1- 2011 247 158
- US-A1- 2012 321 736

## Beschreibung

Die Erfindung betrifft ein dentales Lichthärtgerät, gemäß dem Oberbegriff von Anspruch 1.

Es sind seit langem dentale Lichthärtgeräte als Handgeräte bekannt, die eine Anzeigeeinrichtung auf einer Oberseite aufweisen. Das Lichthärtgerät ist typischerweise in einem Gehäuse aufgenommen, und die obere Gehäusewand ist geeignet ausgebildet, um die Anzeigevorrichtung aufzunehmen.

Grundsätzlich sind zwei Arten von Anzeigevorrichtungen bekannt geworden:
Zum einen weisen derartige Anzeigeeinrichtungen separate Anzeigefelder auf, beispielsweise mittels eines LCD-Displays.

Alternativ kann anstelle eines separaten Anzeigefelds eine Anzeigeeinrichtung auch einzelne Leuchtelemente aufweisen oder aus diesen bestehen. Diese können zum Beispiel als LEDs realisiert sein. Sie können verschiedenfarbig sein, oder auch entsprechend ausgestaltete Symbole beleuchten.

Für eine zuverlässige Behandlung benötigen Zahnärzte ausgesprochen helle Arbeitsfeldleuchten. Derartige Arbeitsfeldleuchten haben eine Lichtstärke bis 50.000 Lux.

Beim Lichthärten von Dentalrestaurationsteilen befindet sich das Lichthärtgerät typischerweise im von der Arbeitsfeldleuchte beleuchteten Bereich. Hierunter leidet die Erkennbarkeit, und zudem erschweren häufig Reflexionen die eindeutige Feststellung dessen, was die Anzeigevorrichtung gerade anzeigt.

Andererseits soll sich der Zahnarzt auf den Behandlungsort konzentrieren, so dass komplizierte und nicht auf den ersten Blick indentifizierbare Zeichen auf einem LCD-Display ergonomisch ungünstig sind.

Bei Anzeigeeinrichtungen mit Leuchteinrichtungen sind grundsätzlich zwei Arten bekannt geworden:
Zum einen bestehen Anzeigeeinrichtungen aus je separat gefassten und separat vergossenen LED-Elementen, die aus der oberen Gehäusewand des Lichthärtgeräts herausragen und deren Anzeige den entsprechenden Betriebszustand des dentalen Lichthärtgeräts signalisieren soll.

Zum anderen sind hinterleuchtete Anzeigen bekannt geworden, die darauf beruhen, dass die obere Gehäusewand mindestens teilweise lichtdurchlässig oder transparent ist. Ein unterhalb dieser Wand angeordnetes Leuchtelement wird eingeschaltet und soll dann ein entsprechend ausgebildetes Symbol hinterleuchten, so dass es erkennbar ist.

Ein Vorteil dieser Lösung ist die glatte Oberfläche der Gehäusewand. Eine solche ist gerade in Zahnarztpraxen wichtig, um ein hygienisches Arbeiten zu ermöglichen und Schmutzecken zu vermeiden.

Unter starkem Lichteinfall der Arbeitsfeldleuchten ist jedoch die Erkennbarkeit des Anzeigezustands der Anzeigeeinrichtung bei dieser Lösung schwierig.

Die Druckschrift US 2012/321736 A1 betrifft ein Lichthärtgerät für zahnmedizinische Zwecke und insbesondere ein handgehaltenes Lichthärtgerät.

Die Druckschrift US 2011/247158 A1 betrifft ein Anzeigefeld, insbesondere eine Informationsanzeige, die das Anzeigefeld umfasst, ein Gerät, das das Informationsdisplay umfasst, und ein Verfahren zur Herstellung eines lichtdurchlässigen Trägerelements des Anzeigefelds.

Die Druckschrift DE 10 2008 027 220 A1 betrifft eine Anzeigevorrichtung für ein Kochfeld, ein Kochfeld mit mehreren derartigen Anzeigevorrichtungen sowie ein Verfahren zum Betrieb einer solchen Anzeigevorrichtung.

Die Druckschrift JP 2011 200451 A betrifft eine elektrische Zahnbürste mit einem lichtemittierenden Element, das auf einem Substrat in einem Gehäuse vorgesehen ist, das als Griff dient, und einem Plattenelement, das in einer an der Vorderseite des Gehäuses ausgebildeten Aussparung vorgesehen ist, wobei Licht vom lichtemittierenden Element zur Außenseite des Gehäuses emittiert wird.

Die Druckschrift US 2002/133970 A1 betrifft ein leichtes Aushärtungssystem, das zum Aushärten von Materialien in einem maßlich begrenzten, wärmeempfindlichen Raum geeignet ist.

Daher liegt der Erfindung die Aufgabe zu Grunde, ein dentales Lichthärtgerät zu schaffen, das eine hinterleuchtete Anzeige ermöglicht, die zum einen vergleichsweise günstig herzustellen ist und zum anderen unabhängig vom externen Beleuchtungszustand eine gute Erkennbarkeit ermöglicht.

Diese Aufgabe wird erfindungsgemäß durch Anspruch 1 gelöst. Vorteilhafte Weiterbildungen ergeben sich aus den Unteransprüchen.

Ein besonderer Vorteil ergibt sich überraschend daraus, dass die lichtdurchlässige oder teillichtdurchlässige Gehäusewand eine im Wesentlichen glatte Oberfläche mit einem Negativmuster aufweist. Das Negativmuster kann beispielsweise ein Symbol, eine Zahl, oder eine beliebige kurze und prägnante Kombination von Symbolen, Zahlen und Buchstaben sein. Lediglich das Negativmuster und die von diesem abgedeckten Bereiche der Gehäusewand werden durchleuchtet.

Hierdurch ist überraschend der Kontrast dort besonders stark, so dass auch bei starkem externen Lichteinfall, wie beispielsweise mit 50.000 Lux, eine sichere Identifikation möglich ist, ob das betreffende Leuchtelement der Anzeigeeinrichtung leuchtet oder nicht.

Dies wird insbesondere dann gefördert, wenn die die transparenten Bereiche umgebenden Flächen dunkel, besonders bevorzugt, schwarz sind.

Das erfindungsgemäße Lichthärtgerät kann hinsichtlich der oberen Gehäusewand dann besonders leicht so hergestellt werden, dass die transparente Wand, beispielsweise mittels Siebdruck, mit einer schwarzen Schicht beschichtet oder mit einem schwarzen Lack lackiert wird, und zwar an den Stellen, an denen das Negativmuster das Symbol umgibt.

Das Negativmuster selbst ist lichtundurchlässig, wobei es aber wesentlich darauf ankommt, es dunkel zu halten, also beispielsweise schwarz.

Besonders günstig ist es, wenn die Gehäusewand selbst in sich flach ist, also keine Vertiefungen aufweist, und zwar weder innen noch außen. Hierdurch lässt sie sich besonders leicht herstellen. Erfindungsgemäß ist es jedoch vorgesehen, dass die Lichtquellenstruktur selbst, die die Lichtquellen aufweist und trägt, Trennwände aufweist, die die Lichtquellen voneinander trennen. Die Trennwände weisen bevorzugt obere Abschlussflächen auf, auf denen die Gehäusewand aufliegen kann.

Die dort bestehende plane Fläche ist besonders geeignet, durch Auflage der dort ebenfalls mit dem Negativmuster versehenen und undurchlässigen Gehäusewand zusammen zu wirken und damit einen sicheren Abschluss für einzelne Leuchtbereiche gegeneinander zu gewährleisten. Ein derartiger Abschluss verhindert, dass ein Überstrahlen von einem Leuchtbereich zum anderen stattfinden kann.

Diese obere Abschlussfläche kann bei Bedarf auch mit einer Dichtlippe versehen sein, die das erwähnte Überstrahlen sicher blockiert. Alternativ kann auch die Gehäusewand kurzerhand auf die Abschlussfläche aufgeklebt sein.

Erfindungsgemäß besonders günstig ist es, wenn die Gehäusewand aus einem semitransparenten Kunststoffmaterial besteht, das einen deutlich höheren Brechungsindex als Luft aufweist.

Die Transluzenz ist so eingestellt, dass bei ausgeschalteten Lichtquellen keines der vorbereiteten und durch die Negativmuster gegebenen Symbole sichtbar ist.

Im Rahmen dieser Anmeldung seien unter "Symbol" neben eigentlichen Symbolen und Bildern auch beliebige andere Zeichen wie Zahlen oder Buchstaben zu verstehen. Erfindungsgemäß ist es auch günstig, wenn die halbtransparente Gehäusewand mindestens im Bereich der Anzeigeelemente eine glänzende Oberfläche hat. Intensiv auftreffendes Fremdlicht wird hierdurch mindestens teilweise reflektiert und dringt nur zu einem geringen Teil in die Leuchtbereiche ein.

Damit wird verhindert, dass durch das Gegenlicht Pseudoanzeigen entstehen, dass also aufgrund des reflektierten Gegenlichts der Eindruck erweckt wird, der betreffende Leuchtbereich sei von der zugehörigen Lichtquelle erleuchtet.

Erfindungsgemäß besonders günstig ist es insofern, wenn der Leuchtbereich frei von gesonderten oder integrierten Reflektoren ist. Hierdurch ist sichergestellt, dass etwaiges trotz der erfindungsgemäßen Maßnahmen einfallendes Fremdlicht im Leuchtbereich absorbiert wird und nicht reflektiert wird.

Unter Leuchtbereich sei hier die Kammer verstanden, die eine Lichtquelle umgibt. In vorteilhafter Ausgestaltung ist diese an ihrer Unterseite von einer Printplatte und einem LED-Chip begrenzt, an ihren Seitenwänden von Trennwänden, die ein Lichtübertritt zu der nächst benachbarten Kammer verhindern, und an ihrer Oberseite durch das Negativmuster und das darin belassene Symbol, das als einziges Element, das diese Kammer umgibt, transparent ist.

Durch die dunkle Ausgestaltung des Negativmusters hebt sich das hinterleuchtete Symbol klar und auch bei ungünstigen Umgebungslichtverhältnissen deutlich von dem insofern bereit gestellten Hintergrund ab.

Die glatte Außenoberfläche ist bevorzugt frei von Mitteln, die die Reflexion begünstigen. Sie kann bevorzugt glatt sein und ermöglicht es so, die im zahntechnischen Umfeld erwünschte Keimfreiheit sicherzustellen.

Die in sich transparente Gehäusewand kann an ihrer Unterseite mit dem Negativmuster versehen sein. Das Negativmuster kann entweder in Lackform oder als Beschichtung bereitgestellt sein.

Eine Möglichkeit der Realisierung ist die Aufbringung per Siebdruck.

Die Symbole können außen mit einer weißen Beschichtung versehen sein. Die weiße Beschichtung hat eine gewisse Deckkraft, ist jedoch so ausgebildet, dass die von innen strahlende Lichtquelle deutlich ersichtlich ist. Dabei ist es günstig, wenn das Negativmuster außen aufgebracht ist, so dass es fugenlos zu der weißen Beschichtung oder dem weißen Lack im Bereich der Symbole übergeht.

Alternativ kann das Negativmuster auch innen auf der Gehäusewand aufgebracht sein, und eine vollflächige weiße Beschichtung außen.

Weitere Vorteile, Einzelheiten und Merkmale ergeben sich aus der nachfolgenden Beschreibung eines Ausführungsbeispiels der Erfindung anhand der Zeichnung.

Es zeigen:
- Fig. 1: eine schematische Ansicht einer Oberwand einer oberen Gehäusewand eines erfindungsgemäßen dentalen Lichthärtgeräts in einer Ausführungsform; und
- Fig. 2: ein Schnitt durch ein Detail eines dentalen Lichthärtgeräts zur Darstellung unter anderem der Anzeigevorrichtung.

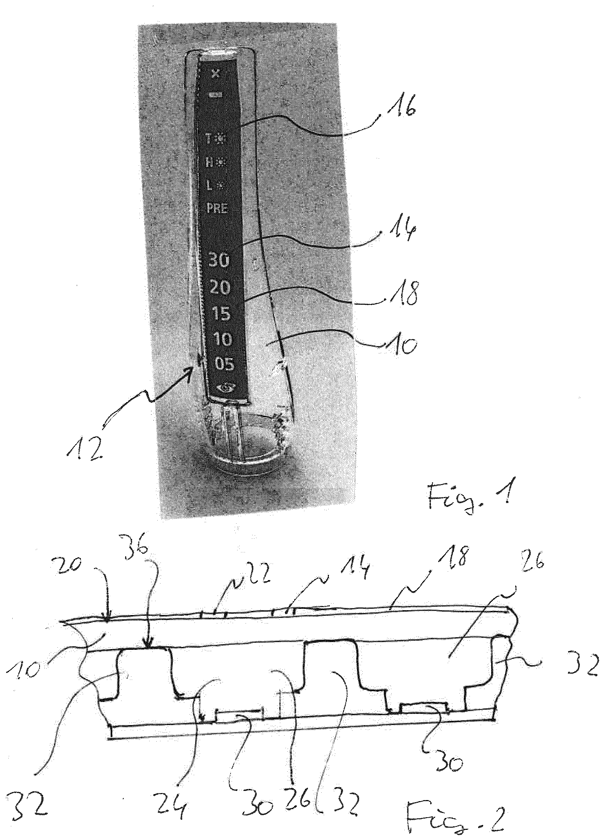

Aus Fig. 1 ist ein Dentail eines erfindungsgemäßen dentalen Lichthärtgeräts ersichtlich. Es handelt sich um ein Formteil, das eine Gehäusewand 10 an der Oberseite des stiftförmigen oder pistolenförmigen dentalen Lichthärtgeräts bildet. Das dentale Lichthärtgerät ist als Handgerät ausgebildet und weist im Übrigen die an sich bekannten weiteren Bauteile auf, also beispielsweise eine Lichtquelle, eine Steuereinheit, ein Auslöseelement und eine Energiequelle wie ein Akkumulator sowie auch einen Lichtleitstab für die Aufbringung der abgegebenen Lichtleistung auf die zu behandelnden Bereiche, beispielsweise im Mund eines Patienten, oder aber auch für die Lichthärtung von auszubessernden Teilen von Prothesen.

An der Gehäusewand 10 ist eine Anzeigevorrichtung 12 ausgebildet.

Die Anzeigeeinrichtung 12 weist eine Vielzahl von Symbolen 14 auf. Hierunter seien die Symbole im eigentlichen Sinne wie die Sonne 16, aber auch Zahlen, Buchstaben oder ähnliche Elemente wie die hier abgebildeten, oder beliebige Abwandlungen dieser zu verstehen.

Die Symbole 14 sind hinterleuchtet. In ausgeschaltetem Zustand des betreffenden Symbols ist das Symbol nicht zu sehen. Beispielsweise sind im untern/hinteren Bereich der Anzeigeeinrichtung die Symbole "05", "10", "15", "20" und "30" in Fig. 1 ersichtlich. Diese sollen die auszuwählende Betriebsdauer des Lichthärtgeräts in Sekunden anzeigen. Über einen Bedienknopf lassen sich die betreffenden Zeiten zyklisch ansteuern, bevor die Auslösung des Lichthärtzyklus gestartet wird.

Wenn beispielsweise die Lichthärtezeit "20 Sekunden" angewählt wird, leuchtet lediglich die Anzeige "20" auf, während die übrigen Anzeigezeiten "30" und so weiter nicht nur nicht erleuchtet sind, sondern überhaupt nicht sichtbar sind. Dies hat den Vorteil, dass die betreffende Zykluszeit vom Benutzer eindeutig idenzifizierbar ist.

Erfindungsgemäß ist hierzu die Gehäusewand mit einem Negativmuster 18 versehen. Dieses ist lichtundurchlässig - oder zumindest im Wesentlichen lichtundurchlässig -. Es belässt die Bereiche der Symbole 14 frei, so dass Licht lediglich dort durch die Gehäusewand 10 hindurch treten kann.

Diese Gehäusewand selbst besteht aus einem transparenten Kunststoff, und durch das Aufbringen des Negativmusters 18 werden die Symbole 14 gebildet.

Das Negativmuster 18 kann auf der Unterseite der Gehäusewand 10 aufgebracht sein. Die Aufbringung auf der Unterseite hat den Vorteil, dass das Negativmuster 18 kratzfest geschützt ist.

Die Struktur einer Anzeigeeinrichtung ist aus Fig. 2 ersichtlich. Gleiche Bezugszeichen weisen hier auf gleiche Teile hin. Die Gehäuswand 10 ist transparent und trägt auf ihrer Oberseite 20 das Negativmuster 18 und die Symbole 14. Das Negativmuster 18 ist hier als schwarzer Lack ausgebildet, der aufgedruckt ist. Die von ihm freigelassenen Bereiche der Symbole 14 sind mit weißem Decklack 22 ausgefüllt.

Unterhalb des Symbols 14 ist je ein Leuchtbereich 24 ausgebildet. Dieser ist nach der Art einer Kammer 26 realisiert. Es ist eine Printplatte 28 ausgebildet, auf der die Lichtquellen 30 in an sich bekannter Weise als LED-Chips befestigt sind. Die Leuchtbereiche 24 und Kammern 26 sind von Trennwänden 32 voneinander getrennt. Diese erstrecken sich zwischen der Printplatte 28 und der Gehäusewand 10. Sie können beispielsweise aus einem lichtabsorbierenden schwarzen Kunststoff bestehen und verhindern sowohl den Übertritt von Licht aus einer Kammer 26 in die benachbarte Kammer 26 als auch eine unerwünschte Reflektion von Fremdlicht.

Jede Trennwand weist eine obere Abschlussfläche 36 auf. Diese dient der Abstützung der Gehäusewand 10. Die Abschlussfläche weist je eine gewisse Breite auf, die beispielsweise der Hälfte, einem Drittel oder einem Viertel der Breite jeder Kammer entspricht. Hierdurch wird der Lichtübertritt von einer Kammer 26 zur benachbarten Kammer 26 über die transparente Trennwand 10 weiter reduziert.

In der dargestellten Anzeigeeinrichtung ist das Negativmuster 18 und sind die Symbole 14 auf der Oberseite 20 aufgebracht. Bei dieser Anzeigeeinrichtung sind breite Trennwände 32 erwünscht.

Wenn hingegen das Negativmuster 18 und die Symbole 14 auf der Unterseite 40 der Gehäusewand (10) aufgebracht sind, ist es auch möglich, mit schmaleren Trennwänden 32 zu arbeiten, nachdem dann ein Lichtübertritt über die transparente Gehäusewand 10 zur benachbarten Kammer 26 nicht möglich ist.

In einer besonders bevorzugten Ausgestaltung ist es vorgesehen, den weißen Decklack 22 vollständig auf der Oberseite 20 der Trennwand 10 zu realisieren, und das Negativmuster 18 und die Symbole 14 an der Unterseite 40 der Trennwand.

Diese Lösung kombiniert die Vorteile der Anbringung an der Oberseite und der Unterseite: die Symbole sind an der Oberfläche nicht erkennbar, wenn das betreffende Lichtquellenelement 30 ausgeschaltet ist. Sie erscheinen aus dem Untergrund beim Einschalten, was als "Magic Design" bezeichnet werden kann. Die Oberseite 20 ist mit ihrer Oberfläche komplett glatt, was aus Hygienegründen bevorzugt ist.

## Patentansprüche

1. Dentales Lichthärtgerät mit einer Anzeigeeinrichtung auf oder an einer Gehäusewand des Lichthärtgeräts, mit einer Mehrzahl von Lichtquellen, die unterhalb der Wand angeordnet sind und auf die Wand weisen, wobei mindestens ein Teil der Wand für die von den Lichtquellen abgegebene Lichtstrahlung durchlässig ist, und die Wand auf eine Lichtquellenstruktur aufgesetzt ist, die Trennwände (32) aufweist, die die Lichtquellen (30) voneinander trennen, **dadurch gekennzeichnet, dass** die Wand eine glatte Außenoberfläche aufweist und eine glatte Innenoberfläche der Wand mit einem Negativmuster (18) bedruckt ist, das lichtundurchlässig ist, auf der Innenseite der Wand aufgedruckt ist und Symbole (14) als transparente Bereiche freilässt, wobei die Symbole an der Oberfläche nicht erkennbar sind, wenn das betreffende Lichtquellenelement (30) ausgeschaltet ist.

2. Lichthärtgerät nach Anspruch 1, **dadurch gekennzeichnet, dass** die Wand eine über ihre Erstreckung gleichmäßige Transparenz aufweist oder einer semitransparenten Deckschicht auf ihrer Oberseite (20) versehen ist.

3. Lichthärtgerät nach einem der vorhergehenden Ansprüche, **dadurch gekennzeichnet, dass** mindestens ein Teil der Symbole (14) in Bereichen, die das Negativmuster (18) frei lässt, mit einem Lack oder einer Beschichtung versehen ist.

4. Lichthärtgerät nach einem der vorhergehenden Ansprüche, **dadurch gekennzeichnet, dass** zwischen den Lichtquellen (30) und dem Negativmuster (18) ein Abstand besteht, der mindestens der Hälfte der Größe jedes Symbols entspricht.

5. Lichthärtgerät nach einem der vorhergehenden Ansprüche, **dadurch gekennzeichnet, dass** die Lichtquellen (30) als LED-Chips auf einer gemeinsamen Printplatte (28) an der Seite der Lichtquellenstruktur angeordnet sind, die der Wand gegenüberliegt.

6. Lichthärtgerät nach Anspruch 5, **dadurch gekennzeichnet, dass** die Printplatte (28) an der Lichtquellenstruktur anliegt und die Lichtquellen (30) in die Lichtquellenstruktur hineinragen.

7. Lichthärtgerät nach einem der vorhergehenden Ansprüche, **dadurch gekennzeichnet, dass** die Kombination aus Wand, Lichtquellenstruktur und Printplatte (28) mindestens teilweise miteinander verbunden und welche sich einander gegenseitig nach der Art eines Rahmens mit Waben aussteifen.

8. Lichthärtgerät nach einem der vorhergehenden Ansprüche, **dadurch gekennzeichnet, dass** die Lichtquellen (30) sich mindestens teilweise in einem Raster angeordnet befinden, und dass das Lichthärtgerät mindestens ein Bedienelement aufweist, das in der Verlängerung der Reihe angeordnet ist, oder die Reihe unterbricht.

9. Lichthärtgerät nach einem der vorhergehenden Ansprüche, **dadurch gekennzeichnet, dass** die Lichtquellen (30) in der zueinander gleichen Höhenlage in einer Ebene angeordnet sind und die Wand eines Wölbung aufweist, die über die Reihe der Lichtquellen (30) gewölbt ist, so dass die Lichtquellen (30) gegenüber Seitenbereichen der Wölbung mittig hervor treten.

10. Lichthärtgerät nach einem der vorhergehenden Ansprüche, **dadurch gekennzeichnet, dass** die Gehäusewand (10) die Lichtquellenstruktur an den Trennwänden (32) berührt und dort aufliegt.

11. Lichthärtgerät nach Anspruch 10, **dadurch gekennzeichnet, dass** mindestens zwei Trennwände (32) vorgesehen sind, die an einer Abschlussfläche (36) enden, wobei die Abschlussflächen (36) mehrerer einander benachbarter Wände höhengleich ausgebildet sind und von der Gehäusewand (10) abgedeckt sind.

12. Lichthärtgerät nach einem der Ansprüche 9, 10, oder 11, **dadurch gekennzeichnet, dass** die Lichtquellenstruktur eine Printplatte (28) aufweist, auf welcher sowohl die Trennwände (32) als auch die Lichtquellen (30) aufgebracht sind.

13. Lichthärtgerät nach einem der vorhergehenden Ansprüche, **dadurch gekennzeichnet, dass** ein Leuchtbereich (24) von den Trennwänden (32), der Gehäusewand (10) und einer Printplatte (28) umgeben ist und frei von Reflektorelementen ist.

## Claims

1. A dental light curing apparatus, having a display device on or at a housing wall of the light curing apparatus, having a plurality of light sources, which are arranged below the wall and face the wall, wherein at least part of the wall is permeable to the light radiation emitted by the light sources and the wall is positioned on a light source structure which comprises partition walls (32) which separate the light sources (30) from each other, **characterized in that** the wall has a smooth outer surface and **in that** a negative pattern (18) is printed on a smooth inner surface of the wall, which negative pattern is impermeable to light, printed on the inside of the wall and leaves blank symbols (14) as transparent regions, said symbols not being recognizable on the surface when the respective light source element (30) is turned off.

2. The light curing apparatus according to claim 1, **characterized in that** the wall has a uniform transparency throughout its extension or is provided with a semitransparent cover layer on its upper face (20).

3. The light curing apparatus according to one of the preceding claims, **characterized in that** at least part of the symbols (14) is provided with a lacquer or a coating in regions which are left blank by the negative pattern (18).

4. The light curing apparatus according to one of the preceding claims, **characterized in that** the light sources (30) and the negative pattern (18) are spaced apart from each other by a distance which corresponds to at least half of the size of each symbol.

5. The light curing apparatus according to one of the preceding claims, **characterized in that** the light sources (30) are arranged on a shared print plate (28) as LED chips on the side of the light source structure opposite the wall.

6. The light curing apparatus according to claim 5, **characterized in that** the print plate (28) abuts the light source structure and the light sources (30) project into the light source structure.

7. The light curing apparatus according to one of the preceding claims, **characterized in that** the combination of wall, light source structure and print plate (28) are at least partially connected to each other and stiffen each other in the manner of a frame with honeycombs.

8. The light curing apparatus according to one of the preceding claims, **characterized in that** the light sources (30) are at least partially arranged in a grid and that the light curing apparatus has at least one operating element that is arranged in extension of the array, or interrupts the array.

9. The light curing apparatus according to one of the preceding claims, **characterized in that** the light sources (30) are arranged relative to each other at the same height level in a plane, and the wall has a curvature that bulges above the array of the light sources (30), so that the light sources (30) centrally protrude in relation to side regions of the curvature.

10. The light curing apparatus according to one of the preceding claims, **characterized in that** the housing wall (10) contacts the light source structure at the partition walls (32) and rests thereon.

11. The light curing apparatus according to claim 10, **characterized in that** at least two partition walls (32) are provided which terminate at an end surface (36), wherein the end surfaces (36) of several adjacent walls are configured to be at the same height level and are covered by the housing wall (10).

12. The light curing apparatus according to one of the claims 9, 10 or 11, **characterized in that** the light source structure comprises a print plate (28), on which both the partition walls (32) and the light sources (30) are applied.

13. The light curing apparatus according to one of the preceding claims, **characterized in that** a light region (24) is surrounded by the partition walls (32), the housing wall (10), and a print plate (28), and is free of reflector elements.

## Revendications

1. Appareil de photopolymérisation dentaire avec un dispositif d'affichage sur ou contre une paroi du boîtier de l'appareil de photopolymérisation, avec une pluralité de sources lumineuses disposées sous la paroi et qui font face à la paroi, où au moins une partie de la paroi est perméable au rayonnement lumineux émis par les sources lumineuses, et la paroi est placée sur une structure à sources lumineuses qui présente des cloisons (32) qui sépare les sources lumineuses (30) les unes des autres, **caractérisé en ce que** la paroi présente une surface extérieure lisse et **en ce qu'**une surface intérieure lisse de la paroi est imprimée avec un motif négatif (18) qui est opaque, imprimé à l'intérieur de la paroi et laisse les symboles (14) libres en tant que zones transparentes, où les symboles ne sont pas visibles sur la surface lorsque l'élément de source lumineuse concerné (30) est éteint.

2. Appareil de photopolymérisation selon la revendication 1, **caractérisé en ce que** la paroi présente une transparence uniforme sur son extension ou est muni d'une couche supérieure semi-transparente sur sa face supérieure (20).

3. Appareil de photopolymérisation selon l'une des revendications précédentes, **caractérisé en ce qu'**au moins une partie des symboles (14) sont pourvus d'un vernis ou d'un revêtement dans les zones laissées libres par le motif négatif (18).

4. Appareil de photopolymérisation selon l'une des revendications précédentes, **caractérisé en ce qu'**il existe une distance entre les sources lumineuses (30) et le motif négatif (18) qui correspond à au moins la moitié de la taille de chaque symbole.

5. Appareil de photopolymérisation selon l'une des revendications précédentes, **caractérisé en ce que** les sources lumineuses (30) sont disposées sous forme de puces LED sur une plaque à circuit imprimé commune (28) sur le côté de la structure à sources lumineuses en face de la paroi.

6. Appareil de photopolymérisation selon la revendication 5, **caractérisé en ce que** la plaque à circuit imprimé (28) repose contre la structure à sources lumineuses et que les sources lumineuses (30) font saillie dans la structure à sources lumineuses.

7. Appareil de photopolymérisation selon l'une des revendications précédentes, **caractérisé en ce que** la combinaison paroi, structure à sources lumineuses et plaque à circuit imprimé (28) est au moins partiellement interconnectée et qu'elles s'entrecroisent à la manière d'un cadre à alvéoles.

8. Appareil de photopolymérisation selon l'une des revendications précédentes, **caractérisé en ce que** les sources lumineuses (30) sont au moins partiellement disposées dans une grille et **en ce que** l'appareil de photopolymérisation présente au moins un élément de commande disposé dans le prolongement de la rangée ou interrompt la rangée.

9. Appareil de photopolymérisation selon l'une des revendications précédentes, **caractérisé en ce que** les sources lumineuses (30) sont disposées dans un plan à la même hauteur les unes par rapport aux autres et que la paroi présente une courbure qui est incurvée sur la rangée de sources lumineuses (30), de manière que les sources lumineuses (30) ressortent au centre par rapport aux zones latérales de la courbure.

10. Dispositif de photopolymérisation selon l'une des revendications précédentes, **caractérisé en ce que** la paroi du boîtier (10) touche la structure à sources lumineuses sur les cloisons (32) et y repose.

11. Appareil de photopolymérisation selon la revendication 10, **caractérisé en ce qu'**au moins deux cloisons (32) sont prévues qui se terminent par une surface de délimitation (36), où les surfaces d'extrémité (36) de plusieurs parois adjacentes sont conçues à la même hauteur et sont recouvertes par la paroi du boîtier (10).

12. Appareil de photopolymérisation selon l'une des revendications 9, 10 ou 11, **caractérisé en ce que** la structure à sources lumineuses comporte une plaque à circuits imprimés (28) sur laquelle sont appliquées à la fois les cloisons (32) et les sources lumineuses (30).

13. Appareil de photopolymérisation selon l'une des revendications précédentes, **caractérisé en ce qu'**une zone d'éclairage (24) est entourée par les cloisons (32), la paroi du boîtier (10) et une plaque à circuits imprimés (28) et est exempte d'éléments réflecteurs.
